(19) Europäisches Patentamt
European Patent Office
Office européen des brevets

(11) **EP 1 341 993 B1**

(12) **FASCICULE DE BREVET EUROPEEN**

(45) Date de publication et mention
de la délivrance du brevet:
**02.05.2007 Bulletin 2007/18**

(21) Numéro de dépôt: **01994879.3**

(22) Date de dépôt: **14.12.2001**

(51) Int Cl.:
***F01L 9/02*** *(2006.01)*

(86) Numéro de dépôt international:
**PCT/FR2001/004006**

(87) Numéro de publication internationale:
**WO 2002/048510 (20.06.2002 Gazette 2002/25)**

(54) **DISPOSITIF DE DISTRIBUTION VARIABLE POUR MOTEURS ALTERNATIFS, MOTEURS LE COMPORTANT ET PROCEDE DE DISTRIBUTION ET DE TURBOCOMPRESSION**

VARIABLE VENTILSTEUERUNGSEINRICHTUNG ,BRENNKRAFTMASCHINE MIT EINEM SOLCHEN EINRICHTUNG, UND VERFAHREN ZUM VENTILSTEUERUNG UND TURBOLADUNG

VARIABLE TIMING DEVICE FOR RECIPROCATING ENGINES, ENGINES COMPRISING SAME AND DISTRIBUTION AND TURBOCHARGING METHOD

(84) Etats contractants désignés:
**DE ES FR GB IT**

(30) Priorité: **15.12.2000 FR 0016422**
**01.03.2001 US 272060 P**

(43) Date de publication de la demande:
**10.09.2003 Bulletin 2003/37**

(73) Titulaire: **Melchior, Jean Frédéric**
**75006 Paris (FR)**

(72) Inventeur: **Melchior, Jean Frédéric**
**75006 Paris (FR)**

(74) Mandataire: **Ramey, Daniel et al**
**Ernest Gutmann - Yves Plasseraud S.A.S.**
**3, rue Auber**
**75009 Paris (FR)**

(56) Documents cités:
**EP-A- 1 101 917          DE-A- 2 219 680**
**DE-A- 2 456 752          DE-A- 3 520 215**
**US-A- 4 344 289          US-A- 5 970 929**

**EP 1 341 993 B1**

**Description**

La présente invention a trait à un dispositif de distribution variable pour moteurs alternatifs à au moins deux arbres à cames dont un, au moins, est équipé d'un déphaseur angulaire, et notamment à deux arbres à cames en tête ainsi qu'à un procédé de mis en oeuvre d'un tel moteur. Par distribution on entend, de façon classique, l'ensemble des séquences d'admission et d'échappement pour le ou les cylindres du moteur alternatif.

On sait que les performances des moteurs alternatifs sont très dépendantes des positions angulaires du vilebrequin, où les soupapes s'ouvrent et se ferment dans le cycle du moteur, et que le diagramme de distribution optimal change avec les conditions de fonctionnement, et, en particulier avec le régime et la charge. Cette distribution influence les taux de compression et de détente effectifs, la quantité de gaz brûlés éventuellement recyclés, l'énergie disponible dans les gaz d'échappement, le rendement volumétrique, le frein moteur etc. Il est donc souhaitable de pouvoir modifier, pendant le fonctionnement du moteur, le réglage des angles d'ouverture et de fermeture de la cavité du cylindre.

Dans les moteurs où les soupapes sont actionnées, classiquement, par des arbres à cames, on peut équiper ces derniers de moyens de déphasage angulaire par rapport au vilebrequin, qui permettent de décaler simultanément les angles d'ouverture et de fermeture de la soupape actionnée, la durée angulaire d'ouverture, restant, par contre, constante.

On a également déjà pensé à régler indépendamment le début et la fin des phases d'admission et d'échappement, et, en conséquence, de faire varier la durée angulaire d'ouverture des soupapes. On a déjà proposé, à cet effet, de commander les soupapes par des moyens électro-hydrauliques, qui permettent de s'affranchir de la géométrie fixe des cames d'arbres à cames. Cependant ces dispositifs de commande sont complexes, coûteux et ne permettent pas de récupérer la totalité de l'énergie d'ouverture des soupapes, énergie qui se dissipe en chaleur dans le fluide de commande et augmente la consommation de carburant.

Le brevet US 4,974,560 décrit un dispositif de distribution variable pour moteurs alternatifs à deux arbres à cames, dans lequel chaque cylindre comporte deux soupapes d'admission et deux soupapes d'échappement, l'une des soupapes d'une paire de soupapes d'admission et/ou d'une paire de soupapes d'échappement étant actionnée par un premier arbre à cames et la seconde par un second arbre à cames, des moyens de déphasage angulaire par rapport au vilebrequin permettant de décaler l'un des arbres à cames par rapport à l'autre et, ainsi, de décaler les phases de fonctionnement d'une soupape de l'une des paires par rapport à l'autre soupape de la paire. Ce dispositif, qui permet de remédier aux inconvénients d'une proposition antérieure consistant à actionner une seule soupape par deux profils de cames susceptibles d'être déphasés l'un par rapport à l'autre, permet de faire varier les positions angulaires d'ouverture ou de fermeture des soupapes ainsi que leur durée d'ouverture, pour une meilleure adaptation aux conditions de fonctionnement du moteur, par exemple une augmentation des durées angulaires d'admission et d'échappement, lorsque la vitesse du moteur est élevée, ou encore, si le moteur est à grande vitesse mais à faible charge, une diminution de ces durées angulaires.

Le brevet US 5,003,939 décrit un mécanisme dans lequel la course de levée de soupape peut être accrue pendant une augmentation de durée d'une phase d'ouverture, au prix, cependant d'une extrême complexité mécanique.

La demande WO 01/42627 décrit un dispositif similaire pour un moteur à quatre temps, possédant au moins deux soupapes d'admission, le déphasage angulaire des deux arbres à cames étant réglé pour faire varier la quantité d'air d'un moteur à allumage commandé sans subir les pertes d'énergie du vannage de l'écoulement dans le collecteur d'admission.

La demande japonaise JP-A-06248916 décrit un dispositif similaire où les deux arbres à cames sont équipés de déphaseurs

L'inconvénient de tous ces dispositifs est qu'ils ne s'appliquent pas aux moteurs équipés d'une seule soupape d'admission et/ou d'échappement par cylindre.

Par ailleurs, la non-simultanéité de l'ouverture ou de la fermeture des soupapes d'admission ou des soupapes d'échappement peut avoir des effets indésirables sur l'aérodynamique interne des cylindres.

Le document DE 3 520 215 A décrit un dispositif selon le préambule de la revendication 1.

La présente invention se propose de remédier aux différents inconvénients de l'art antérieur et de fournir une solution extrêmement simple pour un moteur équipé d'un nombre quelconque de soupapes d'admission et/ou d'échappement, permettant de faire varier, de façon souple, non seulement les moments d'ouverture et de fermeture des soupapes de la culasse, mais également les durées angulaires pendant lesquelles la cavité du cylindre est en relation avec les circuits d'admission ou d'échappement.

Un autre objectif est de fournir une solution permettant de faire varier la loi de levée d'une soupape d'admission ou d'échappement, c'est à dire la distance qui la sépare de son siège lorsqu'elle est ouverte.

Un autre objectif encore est de fournir un dispositif qui annule automatiquement le jeu de fonctionnement des soupapes, générateur de bruit et d'usure.

L'invention a pour objet un dispositif de distribution variable pour moteurs alternatifs à au moins deux arbres à cames, comprenant, pour un même cylindre, au moins une soupape d'admission et au moins une soupape d'échappement, actionnées par lesdits arbres, ainsi que des moyens de déphasage angulaire pour l'un au moins desdits arbres à cames, au moins une même soupape étant actionnée par un moyen de transmission hydraulique susceptible de transmettre à ladite soupape le mouvement d'au moins deux cames appartenant à des arbres à cames distincts pouvant être déphasés l'un par rapport à l'autre. Le moyen de commande hydraulique comporte un volume constant de fluide hydraulique susceptible d'être déplacé par les mouvements de chacune des cames, appartenant respectivement aux deux arbres à cames, pour actionner ladite soupape.

A cette fin le dispositif pour chaque came, une surface déformable ou mobile, par exemple des pistons poussoirs susceptibles d'être actionnés respectivement par les cames, ainsi qu'une surface déformable ou mobile de soupape telle que, par exemple un piston porté par la soupape, de sorte qu'en raison de l'incompressibilité du liquide hydraulique, tout déplacement provoqué par une came entraîne un déplacement de la soupape. Les surfaces déformables, telles que poussoirs ou pistons, sont repoussées en position de repos par des moyens de rappel élastiques.

Ainsi on peut obtenir que grâce à l'incompressibilité du fluide hydraulique, il existe une relation bi-univoque entre les déplacements positifs ou négatifs générés par les cames et le déplacement de la soupape. Tout déphasage entre les arbres à cames modifie la loi de déplacement de la soupape en fonction de la position angulaire du vilebrequin.

L'invention peut être utilisée aussi bien pour les moteurs à cycle à deux temps que pour les moteurs à cycle à quatre temps.

L'invention s'applique avantageusement aux cylindres moteurs ne possédant qu'une soupape d'admission et/ou qu'une soupape d'échappement .auxquels l'art antérieur ne s'applique pas. Elle est aussi avantageuse pour les cylindres équipés de soupapes dont les axes de déplacement sont orientés de façon telle que les commandes mécaniques sont compliquées ou impossibles. Une paire de cames déphasables peut, par ailleurs, commander en parallèle un nombre quelconque de soupapes reliées au même circuit hydraulique. On préférera le cas où les soupapes d'un même groupe sont identiques et où les lois de déplacement sont identiques. Si les soupapes d'un même groupe sont différentes, leurs lois de déplacement varieront avec la vitesse de rotation du moteur à cause des différences entre les inerties et les raideurs des dispositifs de rappel. Le fonctionnement du dispositif n'est stable que si le volume du fluide hydraulique de travail a une valeur constante et égale au volume de la cavité quand les cames ont leur levée minimum (quand les poussoirs reposent sur le cercle primitif de leur came) et que les soupapes commandées reposent sur leur siège. En effet, si le volume de fluide excédait cette valeur, il existerait des conditions où une soupape reste ouverte. Au contraire, si le volume du fluide était inférieur à cette valeur, des chocs entre les soupapes et leurs sièges se produiraient ainsi que des pertes de contact entre les cames et leurs poussoirs. Des phénomènes de cavitation pourraient aussi se produire au sein du fluide hydraulique.

La solution préférée pour ajuster le volume du fluide de travail est de le calibrer à chaque cycle de la façon suivante :

La cavité est reliée à une source de pression d'huile (par exemple la pression de graissage du moteur) au moyen d'un clapet anti-retour pour compenser les fuites.

Un petit orifice de décharge est ouvert pendant la période de repos, par exemple en étant découvert par un des poussoirs quand il se trouve à son point mort pour écouler le trop-plein. Dès que le poussoir se met en mouvement, pour faire monter la pression du fluide, il ferme l'orifice et annule la fuite. Ce dispositif assure une annulation automatique du jeu de fonctionnement des soupapes.

Les moyens de déphasage angulaire peuvent comporter des déphaseurs de tous types déjà connus dans les moteurs à arbres à cames. On préférera cependant utiliser les moyens de déphasage décrits dans le brevet européen 0 388 244 ou le brevet US 5,645,017 dont le fonctionnement est particulièrement simple et performant. Les paramètres agissant sur les moyens de déphasage pour produire un déphasage angulaire sont, de préférence, la charge ou le couple moteur ou la vitesse, c'est-à-dire le régime ou encore une combinaison de ces paramètres.

D'autres paramètres, tels que le taux de recyclage de gaz brûlés, ou les conditions de fonctionnement de turbocompresseurs, les caractéristiques du frein moteur et les capacités de démarrage au froid peuvent être utilisés pour agir sur les moyens de déphasage.

L'invention a également pour objet les moteurs équipés de la distribution selon la présente invention.

Elle a également pour objet un procédé selon la revendication 9, procédé dont différentes applications sont caractérisées par le fait que :

1. Pour optimiser la respiration d'un moteur à 4 temps on programme les déphaseurs pour augmenter l'avance d'ouverture d'admission, le retard de fermeture échappement, l'avance ouverture d'échappement et le retard de fermeture d'admission quand le régime augmente.

2. Pour créer une rétention de gaz chauds dans un moteur à 4 temps, notamment diesel, on programme les déphaseurs pour avancer la fermeture d'échappement et, corrélativement, retarder l'ouverture d'admission sans modifier sensiblement l'ouverture échappement et la fermeture admission.

3. Pour l'accélération d'un turbocompresseur d'un moteur on programme les déphaseurs pour augmenter l'avance d'ouverture échappement sans modifier sensiblement la fermeture échappement, et les fermeture-ouverture admission.

4. Pour pallier le manque de perméabilité d'un moteur à 4 temps équipé de cames courtes associées aux systèmes de distribution variable selon l'invention, on l'équipe d'un système de turbo-compression à deux étages dont le turbocompresseur haute pression est dimensionné pour refouler un volume d'air égal au volume balayé par les pistons à bas régime et de détendre ce volume, surcomprimé à haut régime, à travers le système d'admission réglé pour que le volume détendu soit égal à la valeur désirée à ce nouveau régime. En parallèle, l'excès d'air pourra être réglé par l'angle d'ouverture d'échappement conformément à l'application 2. Ce procédé a l'avantage de livrer naturellement au moteur une masse d'air par cycle à peu près indépendante du régime sans avoir recours à une régulation et de pouvoir affiner le réglage de l'excès d'air de combustion par variation du calage de la distribution.

Ainsi il est fourni un procédé de turbocompression d'un moteur à 4 temps équipé de deux turbocompresseurs, de préférence à géométrie fixe, montés en série sur le circuit des gaz, avec de préférence un réfrigérant d'air en aval de chaque compresseur, dans lequel le compresseur basse pression (BP) est dimensionné pour délivrer le débit d'air nécessaire pour la puissance maximale avec un rendement élevé à l'altitude au-delà de laquelle un détimbrage du moteur est accepté. Dans l'état actuel de la technique, ceci correspond à un rapport de pression voisin de 2,5 au niveau de la mer.

Le compresseur haute pression (HP) est dimensionné comme si la vitesse de rotation du moteur plafonnait à la vitesse du plein couple, soit, par exemple, environ 40% de la vitesse maximale. La capacité volumétrique du compresseur HP se situe donc, en conséquence, par exemple, à environ 40% de celle du compresseur basse pression.

Le rapport entre la section des passages distributeurs de la turbine BP et de la turbine HP est choisi pour limiter le rapport de pression du compresseur HP à une valeur où le rendement est optimal et la charge mécanique raisonnable. Dans l'état actuel de la technologie, ce rapport est généralement voisin de 2.

Le système d'admission est configuré pour créer une chute de la pression statique de l'air introduit dans le cylindre telle qu'au point mort bas admission, la pression dans le cylindre soit sensiblement la même à la vitesse maximale et à la vitesse de couple maximum. Dans l'exemple décrit ci-après cette chute de pression est d'environ 50% au régime maximal Nmax et d'environ 10% à 0,4 Nmax.

Cette chute de pression peut avantageusement être obtenue par une section sous-dimensionnée du ou des orifices d'admission du cylindre moteur. Elle peut aussi être obtenue par une durée plus courte de la phase d'admission.

Avec une distribution fixe la fermeture d'admission se situe au voisinage du point mort bas et la chute de pression est obtenue par la mise en vitesse de l'écoulement dans l'orifice d'admission, sous-dimensionné, du cylindre.

On préfère, quand le moteur est équipé d'une distribution variable, de préférence d'un dispositif de distribution à transmission hydraulique selon l'invention, tel que décrit ci-dessus, que la fermeture d'admission se situe au voisinage du point mort bas à bas régime et soit avancée quand le régime augmente jusqu'à un angle tel qu'à Nmax l'air se détende jusqu'à 50% de la pression d'admission pendant la fin de la course d'aspiration.

De façon avantageuse, on peut commander le dispositif de distribution variable pour que l'ouverture d'échappement soit avancée pendant les phases de reprise du véhicule et pendant les régimes stabilisés où l'excès d'air est insuffisant.

5. Pour augmenter l'efficacité du frein moteur d'un moteur à 4 temps on programme les déphaseurs pour avancer l'ouverture d'échappement afin de diminuer le travail positif sur l'arbre moteur et accélérer le turbocompresseur et avancer la fermeture échappement pour augmenter le travail négatif pendant la course d'échappement. Afin d'éviter de récupérer cette énergie pendant la course d'aspiration, on maintient l'ouverture admission au voisinage du point mort haut pour laminer les gaz recomprimés vers le collecteur d'admission avec dégradation de la pression totale et conservation sensible de la température totale. Ces gaz sont ensuite réaspirés dans le cylindre pour participer au cycle suivant. Il est indispensable que l'échappement ne se ferme pas trop tôt pour que le volume de ces gaz reste inférieur à la cylindrée et qu'un débit d'air traverse le cylindre dans le sens admission-échappement afin d'évacuer la chaleur produite par le freinage du véhicule.

6. Pour faciliter le démarrage à froid d'un moteur diesel à 4 temps, on programme les déphaseurs comme en 5 en avançant encore plus la fermeture échappement pour inverser le débit d'air à travers le moteur de façon à accumuler, en amont du moteur, une charge d'air qui atteint par paliers, en quelques cycles, la température d'autoallumage. Aussitôt après l'allumage, la fermeture échappement sera retardée pour amorcer un débit de gaz à travers le moteur.

7. Pour augmenter le mouvement de rotation de l'air admis dans le cylindre par une pipe tangentielle ou hélicoïdale, on programme les déphaseurs pour retarder l'ouverture admission afin d'augmenter la chute de pression et donc la vitesse de l'écoulement au siège de la soupape.

D'autres avantages et caractéristiques de l'invention apparaîtront à la lecture de la description suivante, faite à titre d'exemple non limitatif et se référant au dessin annexé dans lequel :

la figure 1 représente une vue schématique en coupe horizontale par l'axe des arbres à cames d'un dispositif selon l'invention dans une première forme de réalisation ;

la figure 2 représente une vue schématique en coupe verticale par l'axe des soupapes de ce dispositif dans cette première forme de réalisation ;

la figure 3 représente des schémas d'application de l'invention à trois différentes architectures de culasse à quatre soupapes, les flèches représentant les liaisons fonctionnelles entre les cames et les soupapes.

la figure 4 représente des diagrammes de fonctionnement à bas régime, respectivement à haut régime, de l'application numéro un, selon l'invention, destiné à optimiser la respiration d'un moteur à 4 temps ;

la figure 5 représente des diagrammes de fonctionnement à faible charge et à forte charge de l'application numéro deux selon l'invention utilisé pour recirculer des gaz de combustion du cycle précédent ;

la figure 6 représente schématiquement un dispositif de turbocompression à deux étages d'un moteur à 4 temps conforme à l'application numéro quatre ;

les figures 7 (a et b) et 8 représentent des diagrammes de fonctionnement de l'application numéro quatre pour adapter les turbo-compresseurs d'un moteur à 4 temps ;

la figure 9 représente des diagrammes de fonctionnement de l'application numéro cinq pour améliorer le frein moteur d'un moteur à 4 temps turbocompressé ;

la figure 10 représente des diagrammes de fonctionnement de l'application numéro six pour améliorer le démarrage à froid d'un moteur diesel à 4 temps.

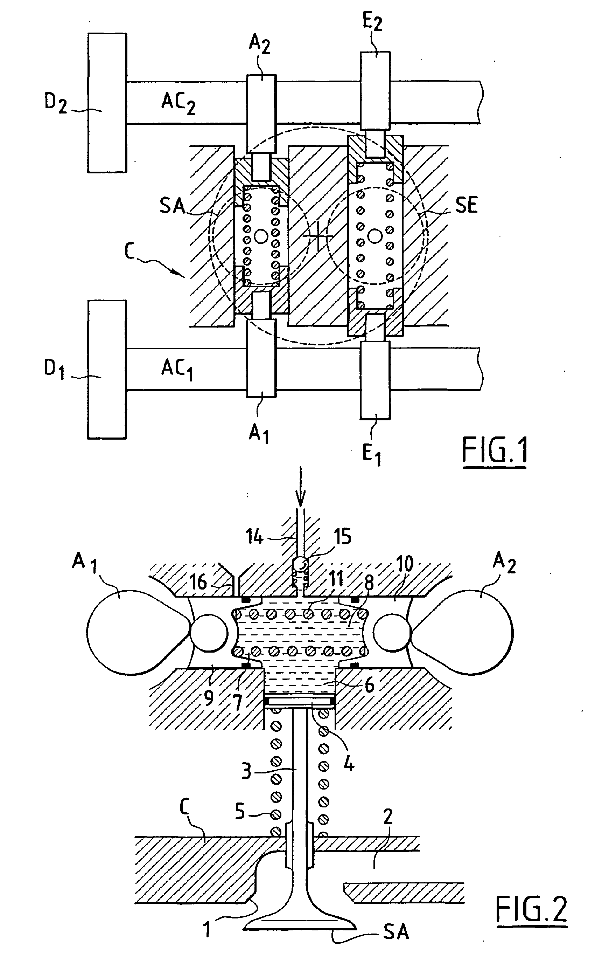

En se référant à la figure 1 on a représenté schématiquement en vue de dessus, une culasse C d'un cylindre de moteur alternatif à quatre temps muni de deux soupapes, à savoir une soupape d'admission SA et une soupape d'échappement SE. Les circuits d'admission et d'échappement n'ont pas été représentés. Ces soupapes sont actionnées par deux arbres à cames en tête AC1 et AC2 muni chacun d'un déphaseur angulaire D1 respectivement D2.Les déphaseurs angulaires peuvent être de n'importe quel type de déphaseur existant déjà dans le commerce. Ils permettent, pendant le fonctionnement du moteur, de décaler angulairement chaque arbre à cames par rapport à l'arbre moteur en fonction de paramètres de fonctionnement du moteur. Etant bien connus de l'homme de l'art, ils ne seront pas détaillés davantage. En tant que de besoin, on pourra se référer aux brevets EP 0 388 244 ou US 5,645,017.

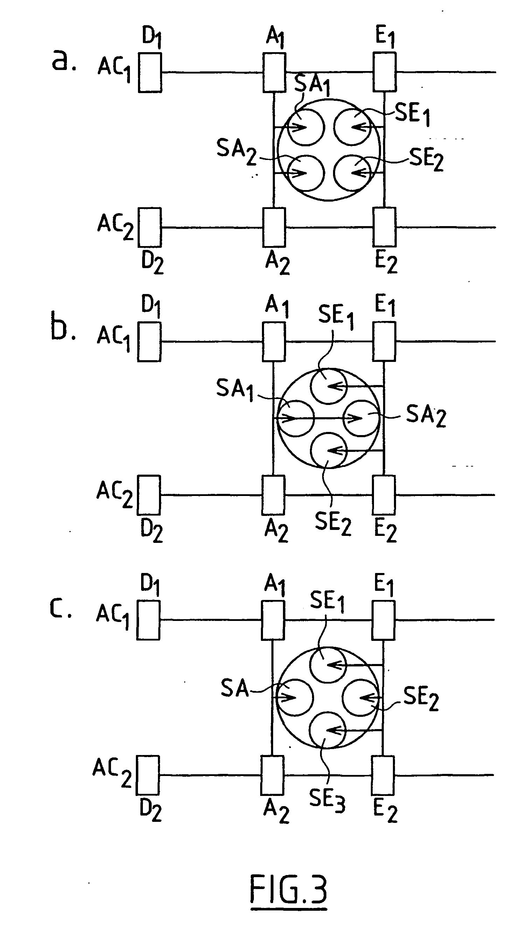

En se référant à la figure 2 on voit une vue schématique en coupe transversale par l'axe de la soupape d'admission SA. La soupape SA est susceptible de s'écarter et de se rapprocher de son siège 1 formant le débouché du collecteur d'admission 2. La tige de soupape 3 se termine par un piston 4 rappelé en position de fermeture de soupape par un ressort ou autre organe de rappel élastique 5. Le piston de soupape 4 coulisse dans une chambre 6 dans laquelle débouchent deux autres chambres 7,8. Dans les chambres 7 et 8 coulissent des poussoirs ou pistons étanches 9, 10 entre lesquels est interposé un ressort 11 qui assure leurs contacts avec les cames. Les poussoirs 9,10 sont en contact de commande avec les arbres à cames AC1 et AC2 qui portent des cames de soupapes d'admission A1 et A2. La cavité déterminée par les chambres 6, 7 et 8 et leurs conduits de communication est remplie d'un volume d'huile égal au volume de la cavité quand la soupape repose sur son siège et les poussoirs reposent sur le cercle primitif de leurs cames. On peut prévoir de maintenir ce volume d'huile par un conduit d'alimentation 14 relié à la pression d'huile moteur par un clapet anti-retour 15. La force du ressort 5 est suffisante pour empêcher l'ouverture de la soupape sous le simple effet de l'arrivée de l'huile sous pression par le conduit 14 quand le clapet 15 s'ouvre. On garantit ainsi une pression minimale dans la cavité quand la soupape est sur son siège. Un évent 16 est avantageusement disposé au voisinage de la position de repos du poussoir 9 de façon, à la fois, à purger le circuit de toute présence de gaz, et à évacuer le trop-plein éventuel. Le recalibrage du volume d'huile est ainsi assuré à chaque cycle. La fuite par l'évent 16 est obturée par le poussoir 9 dès qu'il commence à bouger pour augmenter la pression. On assure également, de cette façon, un rattrapage automatique du jeu de fonctionnement des soupapes.

La constance du volume de liquide dans la cavité est donc assurée pendant la phase de repos des cames et de la soupape.

La soupape d'échappement SE est actionnée par les cames E1 et E2 grâce à un dispositif similaire.

Le fonctionnement est le suivant :

Partant de la période de repos où la soupape est sur son siège et les poussoirs sont immobiles en appui sur le cercle primitif de leurs cames pendant laquelle la pression dans la cavité s'établit sensiblement à la pression du graissage du moteur, dès que la première came A1 déplace le poussoir 9, celui-ci obstrue l'évent 16 et refoule de l'huile vers la chambre 6 en repoussant le piston 4 qui ouvre la soupape. Aussi longtemps que la came A2 n'est pas entrée en action, le déplacement de la soupape est proportionnel à celui du poussoir 9 dans le rapport de surface des pistons 9 et 4. Dès que la came A2 entre en action, le débit refoulé par le piston 10 s'ajoute à celui du piston 9 et on peut écrire :

$$X_9 \bullet S_9 + X_{10} \bullet S_{10} = X_4 \bullet S_4$$

Où X est le déplacement des pistons comptés positivement dans le sens de l'ouverture et négativement dans le sens de la fermeture, S étant leur surface active.

La pression de l'huile dans la cavité varie ainsi cycliquement en fonction de la force des ressorts et des inerties des pièces en mouvement. Ces variations de pression génèrent dans la cavité un régime pulsatoire dont l'amplitude augmente avec la vitesse du moteur. Il est impératif que la pression dans la cavité soit toujours suffisante pour assurer le contact entre les cames et les poussoirs. On améliore la conduite des soupapes en limitant la pression maximale et le volume du fluide de travail. Ceci conduit à préférer des grandes sections de poussoirs et de faibles longueurs de conduits. Les moyens de rappel élastique peuvent être des ressorts métalliques ou pneumatiques ou autres. Chaque poussoir peut être rappelé individuellement ou seulement le poussoir de soupape, la pression d'alimentation assurant alors cette fonction pendant les phases de repos pour les poussoirs de cames 9,10.

Si l'on déphase l'un des arbres à cames par rapport à l'autre, par exemple en retardant l'arbre AC2 par rapport à AC1, l'ouverture de la soupape sera déterminée par AC1, mais la fermeture par AC2 puisque le piston poussoir 10 sera encore animé par la came A2 alors que le piston poussoir 9 sera revenu à sa position de repos. On comprend donc qu'on obtient ainsi des variations, non seulement des positions angulaires d'ouverture et de fermeture des soupapes en modifiant les phases des arbres, mais également de la durée angulaire de la phase d'admission pendant laquelle la soupape SA est ouverte.

On peut, bien entendu, donner des profils de cames différents aux cames A1 et A2 pour obtenir toutes sortes de configurations des lois d'ouverture et de fermeture de soupapes ainsi que des durées angulaires de levées de soupapes, ou encore des valeurs instantanées dé la levée, c'est-à-dire distance séparant la soupape SA de son siège 1.

Par exemple, on peut prévoir que l'une des deux cames présente, une rampe de came de pente plus raide que l'autre, pour l'ouverture, ou la fermeture et, en jouant sur le déphasage, il sera possible de provoquer des ouvertures ou fermetures soit progressives, soit rapides.

A titre d'exemple pour un moteur à deux arbres à cames portant chacun deux cames par cylindre, on aura, entre autres, les possibilités suivantes :

On désigne par OA, OE, FA, FE, les angles (rapportés au vilebrequin) d'ouverture (OA) et de fermeture (FA) des phases d'admission et d'ouverture (OE) et de fermeture (FE) des phases d'échappement. On désigne par A1 et A2 les cames agissant sur l'admission et E1 et E2 les cames agissant sur l'échappement.

On a représenté par le tableau 1 ci-dessous deux possibilités de séquences de distribution selon l'invention dans un cycle.

Tableau 1

| Possibilités | Commandées par AC2 | | Commandées par AC1 | |
|:---:|:---:|:---:|:---:|:---:|
| 1 | OA | OE | FA | FE |
| 2 | OE | FE | OA | FA |

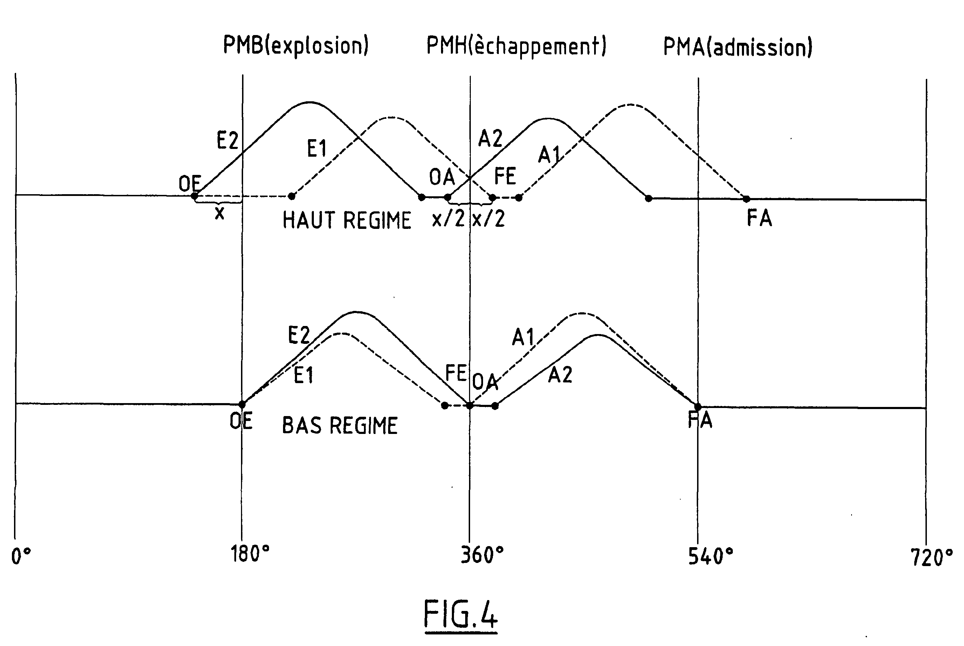

D'autres possibilités peuvent être crées en différenciant les durées d'ouverture de A1 et A2 et/ou de E1 et E2. Par exemple la figure 4 montre que, sur une première plage de déphasage, AC1 contrôle OE et FE, puis sur une deuxième plage AC1 peut perdre le contrôle de OE au profit de AC2 en conservant le contrôle de FE.

Dans la suite de la description, les angles seront exprimés en degrés (DV) vilebrequin, c'est-à-dire correspondront à une rotation du vilebrequin. Dans les cas où l'angle indiqué mesure la rotation effective de l'arbre à cames (qui tourne deux fois plus lentement dans un moteur à quatre temps), l'angle sera exprimé en degrés d'arbre à cames (DC).

Le procédé selon l'invention peut également être mis en oeuvre sur des moteurs possédant une paire de soupapes d'admission et/ou une paire de soupapes d'échappement, les soupapes d'une paire étant actionnées, l'une par un premier à arbre à cames AC1 et l'autre par un second arbre à cames AC2, soit individuellement, par un système de culbuteurs, soit simultanément, les cames agissant sur les soupapes par les moyens de commande hydraulique selon l'invention.

Pour la simplicité de l'exposé, des exemples d'application de ce procédé vont être maintenant donnés en se référant au schéma a de la figure 3.

Description de l'application 1 du procédé : dans la forme de réalisation représentée sur la figure 4, les soupapes d'admission SA1 et SA2 présentent la même dimension. Il en est de même des soupapes d'échappement SE1 et SE2. Les soupapes sont commandées par culbuteurs ou par commande hydraulique comme représenté sur la figure 3, schéma a.

L'arbre à cames AC1 actionne les soupapes SA1 et SE1 alors que l'arbre AC2 actionne les soupapes SA2 et SE2.

La figure 4 représente un diagramme sur lequel on a représenté d'une part un cycle de distribution à haut régime et d'autre part un cycle de distribution à bas régime, l'axe des abcisses figurant l'angle DV du vilebrequin avec le point mort haut PMH échappement à 360 DV, l'axe des ordonnées schématisant la levée de la came. La came d'admission A1 a une durée de levée de 90DC, la came d'admission A2 ayant une durée de levée de 80DC seulement. La came E1 a, par exemple, dans le cas représenté, une durée de levée seulement de 80DC alors que la came d'échappement E2 a une durée de levée de 90DC. Lorsque le moteur est à bas régime (diagramme inférieur), les déphaseurs sont réglés pour que la phase d'échappement s'ouvre au point mort bas PMB échappement, c'est-à-dire à 180DV, et se ferme au point mort haut PMH c'est à dire à 360DV.

Au PMH échappement, a lieu l'ouverture d'admission OA, la fermeture FA se produisant au point mort bas à 540DV.

Un tel fonctionnement correspond bien à un fonctionnement à bas régime.

Il est bien connu que l'accélération d'un tel moteur à quatre temps doit s'accompagner d'une avance angulaire de l'ouverture d'admission et de l'ouverture d'échappement ainsi que d'un retard angulaire de la fermeture d'admission et de la fermeture d'échappement. Par exemple, on peut désirer une avance d'ouverture d'échappement X de 40DV et une avance d'ouverture d'admission X/2 de 20DV. Les déphaseurs D1 et D2 se trouvent alors actionnés par la détection du régime (diagramme supérieur) et l'ouverture d'échappement OE se fera 40DV avant le PMB échappement grâce à l'avance angulaire conférée à la came d'échappement E2 par le décalage avant X/2 = 20DC de l'arbre à cames AC2 qui tourne à la demi vitesse du moteur. La came d'admission A2, qui est actionnée par ce même arbre AC2 agira donc 40DV plus tôt qu'en cas de bas régime, et par conséquence 20DV avant le PMH échappement, déterminant ainsi une avance d'ouverture d'admission X/2 = 20DV. Au contraire l'arbre à cames AC1 est déphasé de 20DC en arrière, la came d'échappement E1 agissant alors bien après le début de la phase d'échappement OE. Son retour au repos déterminera par contre la fin de la phase d'échappement FE qui intervient donc 20DV après le PMH échappement, soit 40DV après l'ouverture d'admission OA. En conséquence on aura obtenu à la fois une avance à l'ouverture échappement et un allongement total de la durée d'échappement qui se termine 20DV après le PMH, ce qui facilitera grandement l'échappement et permettra un balayage. De même, l'ouverture d'admission OA aura été avancée de 20DV mais la fin de la phase finale d'admission FA sera retardée de 40DV après le point mort bas d'admission à 540DV.

Les régimes intermédiaires correspondront à des déphasages intermédiaires.

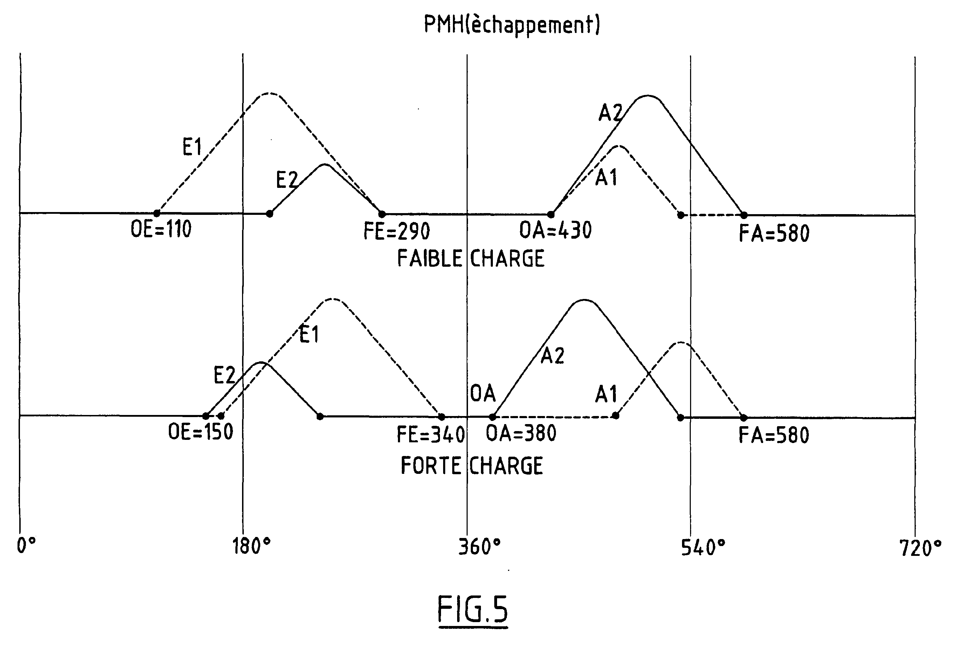

On se réfère maintenant à la figure 5 relative à l'application n° 2, les axes des abcisses et des ordonnées étant les mêmes que sur la figure 4.

Cette figure concerne plus directement le cas des moteurs diesel 4 temps dans lesquels on souhaite retenir une quantité réglable de gaz brûlés du cycle précédant dans le cylindre, par exemple selon le brevet européen No 0593152. Dans ce but il convient de fermer prématurément la phase d'échappement et de retarder corrélativement l'ouverture de la phase d'admission, les gaz retenus subissant un cycle de compression-détente pour passer le PMH échappement. Plus précisément, dans ce type de moteur, il est avantageux de recycler beaucoup de gaz brûlés à faible charge et peu à forte charge. De plus, la prise de charge doit s'accompagner d'une accélération rapide du turbo-compresseur favorisée par une avance de l'ouverture d'échappement. On a représenté sur le diagramme inférieur de la figure 5 la distribution à forte charge et sur le diagramme supérieur la distribution à faible charge.

Dans les cas intermédiaires le calage sera intermédiaire entre les deux extrêmes représentés.

Le volume de gaz chaud retenu dans le cylindre est fixé par la position du piston à FE (fin de la phase d'échappement). La pression du gaz retenu monte légèrement pendant la fermeture de la soupape avec le régime moteur à cause de la perte de charge croissante à FE. Pour éviter un refoulement de gaz dans la pipe d'admission, il conviendra d'ouvrir la phase d'admission quand la pression dans le cylindre est voisine de la pression dans la pipe d'admission.

Dans le présent exemple, le recyclage maximum correspond à FE à 70DV avant le PMH échappement et le minimum pour 20DV. A bas régime, et en supposant que la pression soit identique dans les pipes d'admission et d'échappement, OA sera placée symétriquement par rapport au PMH échappement, soit respectivement 70DV et 20DV après. Avec l'augmentation du régime, il conviendra de retarder FE et d'avancer OA.

Pour le fonctionnement à faible charge, on a choisi une avance OE de 70DV pour entraîner une bonne accélération du turbocompresseur, et un retard FA de 40DV qui augmentera avec le régime moteur.

Pour le fonctionnement à forte charge, on a choisi une avance OE de 30DV et un retard FA non modifié de 40DV.

Ces diagrammes de distribution sont assurés par des arbres à cames AC1 et AC2 configurés conformément à la figure 4, soit les durées angulaires d'ouverture de cames suivantes : A1=50DC, A2=75DC, E1=90DC, E2=45DC

L'arbre AC1 porte les cames A1 et E1 avec un espacement angulaire de 70DC.

L'arbre AC2 porte les cames A2 et E2 avec un espacement angulaire identique.

On passe du recyclage maximum au recyclage minimum en déphasant l'arbre AC1 de 25DC vers le retard et l'arbre AC2 de 25DC vers l'avance, soit 50° en angle vilebrequin. Les déphasages intermédiaires seront programmés pour tenir compte des besoins du moteur.

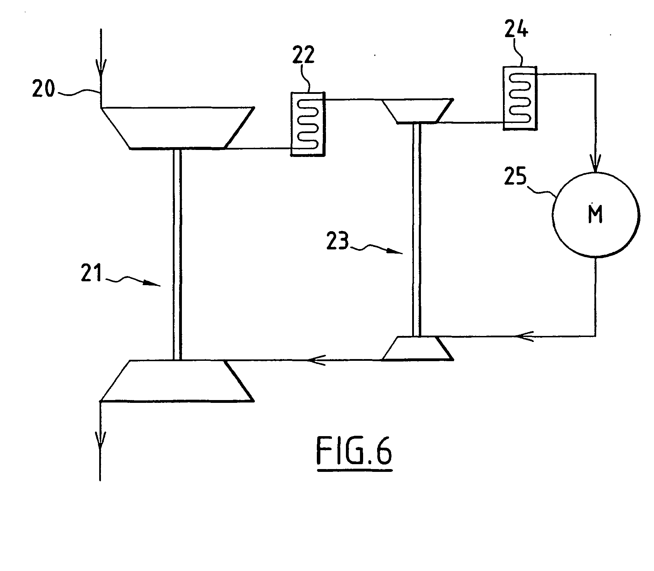

On se réfère maintenant aux figures 6, 7, 8 relatives à l'application du procédé n° 4 :

La figure 6 montre l'entrée d'air 20 aboutissant à l'étage compresseur du grand turbocompresseur basse pression (BP) 21, dont l'aval est relié, par un dispositif de réfrigération 22, à l'étage compresseur du petit turbocompresseur haute pression (HP) 23, avec en aval un dispositif de réfrigération haute pression 24, débouchant à l'admission du moteur 25, dont l'échappement est relié en série aux étages turbines HP puis BP des turbocompresseurs.

L'utilisation du procédé suivant l'invention pour réaliser de grandes variations de la durée angulaire des phases d'admission et/ou d'échappement suppose que l'ouverture angulaire des cames soit très inférieure aux valeurs traditionnelles, avec une diminution importante de la capacité débitante des orifices de la culasse. La pression d'air nécessaire pour maintenir un bon remplissage du cylindre à haut régime s'en trouve considérablement augmentée. Il convient donc d'utiliser un procédé de turbocompression capable d'un haut rapport de pression associé à un rendement énergétique élevé pour ne pas dégrader le rendement du moteur.

Par ailleurs, un moteur automobile à 4 temps suralimenté, diesel par exemple, doit fournir son couple maximum au-dessus de 30 à 40% de sa vitesse de rotation maximale. Le turbocompresseur actionné par le flux des gaz d'échappement doit donc fournir la charge d'air nominale dès les bas régimes et la maintenir jusqu'au régime maximal.

La meilleure solution utilisée aujourd'hui pour atteindre ce but est un compresseur capable de grandes variations de débit à pression de refoulement constante associé à une turbine à géométrie variable en fonction du régime du moteur. Cette flexibilité en débit de la turbomachine se paye par une perte importante de rendement isentropique global compensée par une élévation de la pression turbine pour entraîner le compresseur et donc par une perte de rendement thermique du moteur très pénalisante pour les fortes pressions d'admission associées aux procédés de distribution variable selon la présente invention.

Le principe général du présent procédé de turbocompression est d'alimenter le collecteur d'admission par un volume d'air sensiblement constant à pression variable au lieu d'un volume d'air variable à pression constante. Ce volume d'air réfrigéré est choisi égal au volume balayé par les pistons au régime du couple maximum, soit par exemple 40% du régime maximum. Sous ce petit volume, la charge d'air nécessaire à pleine puissance doit être portée à une pression au moins deux fois plus élevée que dans un moteur classique, soit près de 5 bars. Ceci impose de passer à une turbocompression à deux étages, de préférence à géométrie fixe et rendement élevé avec réfrigération après chaque compresseur, conformément à l'état de l'art comme représenté sur la figure 6 montrant la disposition des deux turbocompresseurs BP et HP, et des deux réfrigérants d'air BP et HP par rapport au moteur.

Ce qui caractérise le présent procédé est la faible perméabilité aérodynamique du dispositif d'admission choisie pour créer, au point mort bas aspiration, une chute de pression d'air d'autant plus élevée que le régime (vitesse de rotation) au couple maximum est voulu bas, soit environ une chute de 50% au régime maximum Nmax du moteur, dans l'exemple présenté.

Avec une distribution fixe qui ferme l'admission au voisinage du point mort bas aspiration, la chute de pression est due à la mise en vitesse de l'écoulement aux orifices. A 0,4 Nmax elle sera de 8% environ.. Sur la courbe de pleine charge, la pression délivrée par les turbocompresseurs, étant sensiblement proportionnelle au débit de carburant brûlé, passera de 2,5 bar à 0,4 Nmax à 5 bar à Nmax ; on comprend donc que la pression dans le cylindre sera relativement indépendante du régime : elle passera, par exemple compte tenu de la perte de pression aux orifices d'admission sous-dimensionnés, de 2,5-8%=2,3 bars à 2000 tr/mn à 5-50%=2,5 bars à 5000 tr/mn. Ce procédé permet donc une adaptation naturelle des turbocompresseurs à géométrie fixe à un moteur à régime variable et distribution fixe, sans aucun réglage tel le contrôle d'une géométrie variable ou d'un débit de gaz bypassant une turbine.

Une distribution variable selon l'invention permet d'améliorer la consommation à haut régime d'un moteur suralimenté selon ce procédé en remplaçant la chute de pression statique de l'air pendant toute la course d'aspiration par une moindre mise en vitesse de l'air par un orifice d'admission de plus grande section pendant une course d'aspiration tronquée par une fermeture précoce des soupapes d'admission, suivie d'une détente jusqu'au point mort bas.

La présente invention permet un fonctionnement de la turbocompression mieux adapté à la propulsion des automobiles ou le rendement thermique doit être optimisé au régime de couple maximum au détriment du régime maximum.

Les avantages de cette disposition sont nombreux :

- accélération rapide du petit turbocompresseur HP 20 qui reçoit son volume de gaz nominal dès les bas régimes moteurs et qui oppose une faible inertie à l'accélération,
- bons rendements isentropiques élémentaires des turbines et compresseurs à géométrie fixe, avec le bénéfice supplémentaire d'une réfrigération de l'air entre les compresseurs,
- simplicité et fiabilité de la géométrie fixe associée à des contraintes centrifuges raisonnables grâce à la multiplication des rapports de pression,
- fonctionnement des compresseurs dans des zones des champs caractéristiques voisines de leur ligne de pompage où les rendements sont élevés,
- vitesse élevée d'introduction de l'air dans le cylindre autorisant de fortes turbulences pendant la combustion.

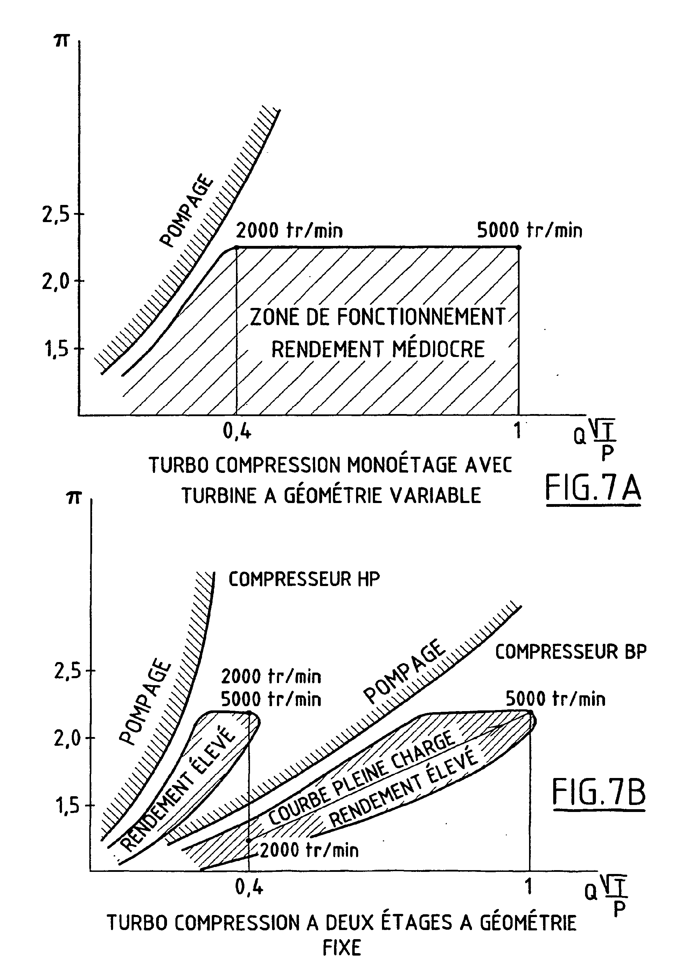

La figure 7 représente les adaptations comparées d'un monoétage à géométrie variable et de deux étages à géométrie fixe selon l'invention.

Sur cette figure :

π est le rapport pression aval/pression amont du compresseur,

Q le débit massique d'air,

P, T les pression et température en amont du compresseur.

Apparaissent, également, les courbes de pompage et les zones de fonctionnement en variation de régime.

On voit que pour un système classique, le point de fonctionnement évolue dans la zone hachurée où les rendements sont médiocres. Au contraire dans l'invention, les points de fonctionnement des deux compresseurs sont confinés dans des zones de bon rendement.

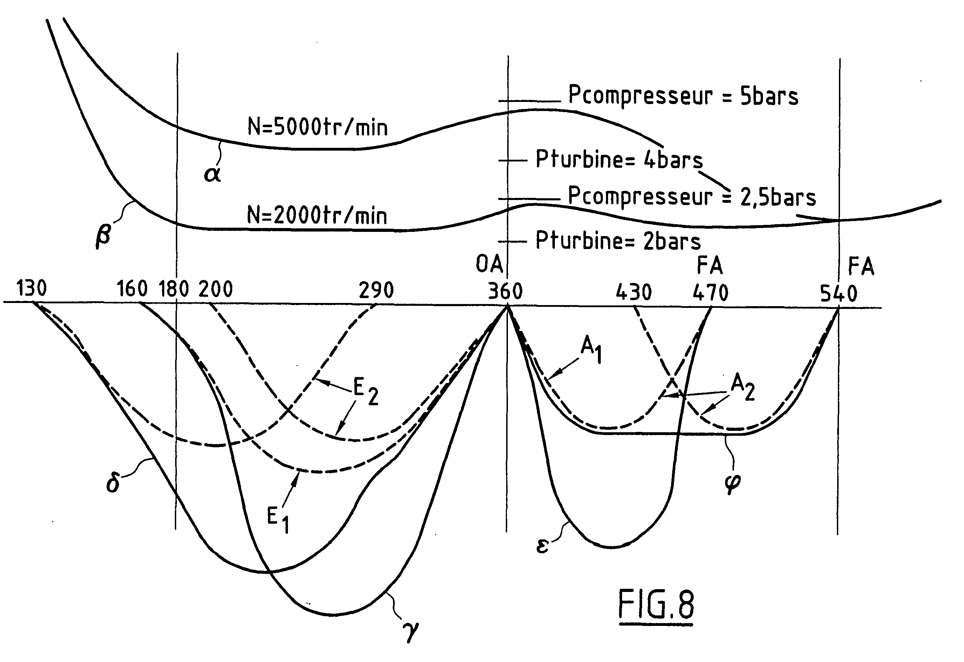

La figure 8 représente deux diagrammes de fonctionnement à 2000 et 5000 tr/mn pleine charge, pour un moteur à deux arbres à cames AC1 et AC2 dont AC2 est équipé d'un déphaseur D2 qui portent respectivement une came d'admission A1 et A2 et une came d'échappement E1 et E2. L'axe des abcisses représente la position angulaire de l'arbre moteur en DV, le point mort haut combustion constituant l'origine. L'ordonnée positive représente la pression statique dans le cylindre, et l'ordonnée négative la levée de chaque came et les sections d'admission et d'échappement qui en résultent.

Les courbes représentées sont :

α, β : pressions statiques dans le cylindre à 5000 tours/mn, respectivement 2000 tr/mn

y, δ : sections d'échappement à 5000 tr/mn, respectivement 2000 tr/mn

ε, φ : sections d'admission à 5000 tr/mn, respectivement 2000 tr/mn

les courbes en trait interrompu sont les levées individuelles des cames A1, A2, E1, E2.

AC1 dont le calage est fixe porte une came d'échappement E1 de 100 DC qui ouvre à 160 DV et ferme à 360 DV, et une came d'admission de 55 DC qui ouvre à 360 DV et ferme à 470 DV.

AC2, dont le calage varie de 35 DC soit 70 DV, porte une came d'échappement E2 de 80 DC et une came d'admission A2 de 55 DC espacées de 35 DC. A bas régime AC2 est calé en position retardée pour fermer E2 à 360 DV et A2 à 540 DV, alors qu'à haut régime AC2 est avancé de 35 DC soit de 7 DV. Entre ces deux valeurs, le calage de AC2 varie en fonction du régime et éventuellement de la charge selon une loi qui optimise le travail positif des gaz pendant la course d'aspiration.

On voit ainsi qu'à basse vitesse de piston, la pression dans le collecteur est basse et le moteur aspire toute sa cylindrée sans chute de pression notoire malgré la section réduite des orifices d'admission. A forte vitesse de piston la surpression dans le collecteur est élevée et le moteur n'aspire que la moitié de sa cylindrée par des orifices d'admission de section élevée avec une chute de pression similaire. Après FA (fermeture admission) la charge d'air admise se détend dans le cylindre jusqu'au point mort bas.

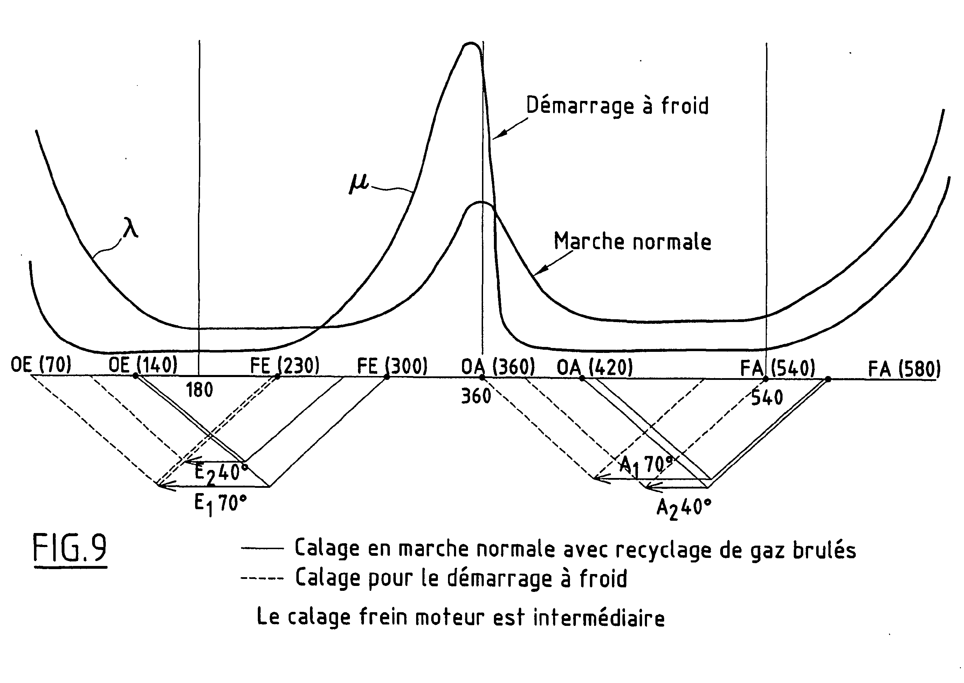

La figure 9 représente un diagramme de fonctionnement d'un procédé pour améliorer la fonction de freinage et le démarrage à froid d'un moteur à 4 temps à recyclage de gaz brûlés selon l'application de procédé N°2.

L'axe des abcisses représente la position angulaire de l'arbre moteur en degrés DV, l'origine étant le point mort haut combustion, l'axe des ordonnées positives représente la pression des gaz dans le cylindre pour les deux calages extrêmes, marche normale (λ) et démarrage à froid (μ), l'axe des ordonnées négatives représente la position des cames. La position frein moteur sera intermédiaire entre ces deux calages extrêmes.

Pour créer du freinage moteur à partir d'un calage normal de la distribution, on avance simultanément OE, FE et OA en maintenant FA au voisinage de 540 DV jusqu'à un angle où la dissipation d'énergie atteint la valeur maximale.

L'avance de OE diminue le travail de détente sur le piston en augmentant la puissance de la turbine et l'avance FE augmente le travail négatif du piston pendant la course d'échappement, travail non récupéré pendant la course d'aspiration grâce à l'avance de OA. A l'ouverture admission au point mort haut, l'air recomprimé est laminé vers le collecteur d'admission où il perd sa pression totale en conservant sa température totale pour occuper un volume supérieur à celui qu'il occupait à FE. Ce volume qui sera immédiatement réaspiré dans le cylindre doit être inférieur à la cylindrée pour qu'un volume d'air frais puisse s'y ajouter pendant la course d'aspiration suivante pour constituer la charge du cycle suivant. La température d'échappement et le débit d'air se stabilisent à un niveau qui ne dépend que de l'angle de FE, la puissance de freinage étant proportionnelle au produit de ces deux paramètres.

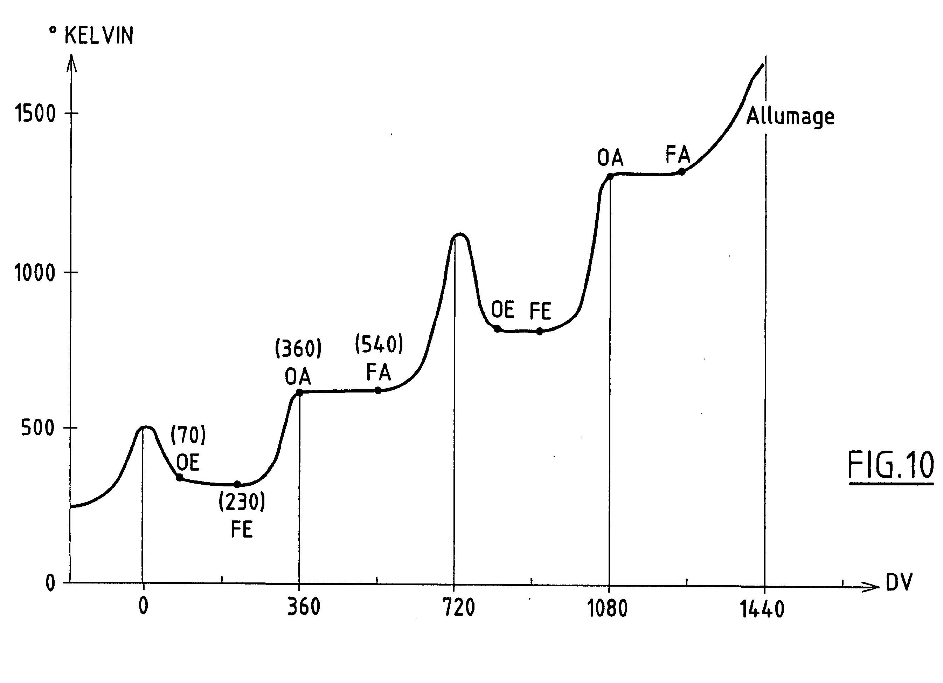

Au-delà d'une certaine avance de FE le débit d'air à travers le moteur s'inverse pour aller du collecteur d'échappement vers le collecteur d'admission avec un fort échauffement à travers le moteur. On accumule ainsi de l'air chaud en amont du moteur qui facilite le démarrage à froid dès que le sens d'écoulement normal est rétabli. La figure 10 représente l'évolution approximative des températures pendant les deux premiers cycles supposés adiabatiques d'un moteur à taux de compression géométrique 11/1 pour une distribution selon le diagramme de la figure 9. L'axe des abcisses représente l'angle de vilebrequin DV, l'axe des ordonnées représentant la température de l'air en °K.

Le moteur comporte deux arbres à camés AC1, AC2 équipés de déphaseurs D1, D2. AC1 porte une came d'admission A1 de 75 DC et une came d'échappement E1 de 85° DC espacées de 65 DC. AC2 porte une came d'admission A2 de 80 DC et une came d'échappement E2 de 65 DC espacées de 75 DC.

Le calage normal de la distribution est :

OA=420 DV FA=580 DV OE=140 DV FE=300 DV.

Pour le démarrage à froid le calage est : OA=360 DV FA=540 DV OE=70 DV FE=230 DV.

Ce calage est obtenu en avançant AC1 de 35 DC et AC2 de 20 DC, soit respectivement 70 DV et 40 DV en actionnant D1 et D2.

Le démarreur est actionné alors que le piston est au point mort bas admission et que le cylindre est plein d'air froid à 250°K. La première compression porte la température à 500°K. La détente écourtée qui suit laisse dans le cylindre de l'air à 350°K qui sera recomprimé jusqu'à 600°K puis réaspiré dans le cylindre à cette température pour subir une nouvelle compression - détente écourtée conduisant à 800°K. La compression partielle suivante porte l'air à 1350°K et la compression finale atteint 2700°K.

Bien entendu, un cylindre froid constitue un puits de chaleur qui absorbera une grande partie de l'énergie des compressions successives, mais si l'on considère que 800°K suffisent largement pour l'auto-allumage, on voit qu'en 4 tours de démarreur un diesel à bas taux de compression démarre par température ambiante très basse. Aussitôt après l'allumage, le calage de la distribution est ramené en position normale où chaque cycle est allumé par les gaz chauds du précédent.

Dans cette application, comme dans les précédentes, le calage angulaire des arbres à cames par le ou les déphaseurs est géré par l'ordinateur de bord usuel qui prend en compte les paramètres nécessaires.

## Revendications

1. Dispositif de distribution variable pour moteurs alternatifs à, au moins, deux arbres à cames (AC1, AC2) comprenant, pour un même cylindre, au moins une soupape d'admission (SA) et au moins une soupape d'échappement (SE) actionnées par lesdits arbres, ainsi que des moyens de déphasage angulaire (D1, D2) pour l'un au moins desdits arbres à cames, au moins une même soupape (A) étant actionnée par un moyen de transmission hydraulique (4,9,10) susceptible de transmettre à ladite soupape le mouvement d'au moins deux cames (A1, A2) appartenant à des arbres à cames distincts (AC1,AC2) pouvant être déphasés l'un par rapport à l'autre, ledit moyen de transmission comprenant une cavité délimitée par, au moins, deux surfaces déformables ou mobiles (9,10) susceptibles d'être déplacées respectivement par les cames (A1, A2) ainsi qu'au moins une surface déformable ou mobile de soupape (4), lesdites surfaces étant rappelées par des moyens de rappel élastique, **caractérisé en ce que** ladite cavité est remplie d'un volume constant de fluide hydraulique égal au volume de la cavité quand les cames et la soupape sont au repos, de sorte, qu'en raison de l'incompressibilité du fluide hydraulique, tout déplacement provoqué par une came entraîne un déplacement de la soupape, et que tout déphasage entre les arbres à cames modifie la loi de déplacement de la soupape en fonction de la position angulaire du vilebrequin.

2. Dispositif selon la revendication 1, **caractérisé en ce que** lesdites surfaces mobiles ou déformables sont des pistons glissant dans des cylindres (4,9,10).

3. Dispositif selon l'une des revendications 1 et 3 **caractérisé en ce que** la cavité hydraulique est relié à une source de pression d'huile au moyen d'un clapet anti-retour (15) pour compenser les fuites.

4. Dispositif selon l'une des revendications 1 à 3, **caractérisé en ce qu'**il comporte un orifice de décharge de fluide hydraulique ouvert pendant les phases de repos et fermé pendant les phases actives des cames pour évacuer le trop-plein éventuel.

5. Dispositif selon la revendication 4 **caractérisé en ce que** le petit orifice de décharge (16) est découvert par une des surfaces ou poussoirs, quand il se trouve à son point mort, et recouvert dès que le piston ou poussoir se déplace, pour écouler le trop-plein, assurant une annulation automatique du jeu de fonctionnement des surfaces.

6. Moteurs à cycle à deux temps ou quatre temps dont au moins une soupape de cylindre moteur est actionnée par un dispositif selon l'une des revendications 1 à 5.

7. Moteur selon la revendication 6, dont les cylindres moteurs ne possèdent qu'une soupape d'admission et/ou qu'une soupape d'échappement.

8. Moteur selon la revendication 6, dont les cylindres comportent une pluralité de soupapes d'admission, de préférence identiques, ou une pluralité de soupapes d'échappement, de préférence identiques, les soupapes d'une pluralité étant actionnées par le même dispositif.

9. - Procédé de mise en oeuvre d'un moteur alternatif, dans lequel on actionne au moins une soupape (SA, SE) de cylindre moteur par un dispositif de distribution variable selon l'une quelconque des revendications 1 à 5, de sorte que l'on transmet le mouvement de deux cames (A1, A2) appartenant à deux arbres à cames (AC1, AC2) distincts pouvant être déphasés l'un par rapport à l'autre par des moyens de déphasage, par le moyen de transmission hydraulique dudit dispositif de distribution variable possédant une cavité remplie d'un volume constant de fluide hydraulique, de sorte que tout déplacement provoqué par une came (A1, A2) entraîne un déplacement de la soupape (SA, SE), et que tout déphasage entre les arbres à cames (AC1, AC2) modifie la loi de déplacement de la soupape (SA, SE) en fonction de la position angulaire du vilebrequin,

dans lequel, au moins dans certaines conditions de fonctionnement, on déphase les arbres à cames (AC1, AC2) de façon à commander, pour un même cylindre, le début des phases d'admission et/ou d'échappement par une des cames (A1, A2), et la fin desdites phases par l'autre came (A1, A2), en modifiant en marche, par les moyens de déphasage sensibles à un ou des paramètres de fonctionnement du moteur, le déphasage entre lesdits arbres à cames (AC1, AC2), de façon à faire varier la durée angulaire de la phase concernée, les paramètre agissant sur les moyens de déphasage pour produire un déphasage angulaire pouvant, notamment, être le couple moteur, la vitesse, le taux de recyclage des gaz brûlés, les conditions de fonctionnement de turbocompresseurs, les caractéristiques du frein moteur et les capacités de démarrage à froid.

10. - Procédé selon la revendication 9, **caractérisé en ce qu'**on dispose dans chaque cylindre moteur une seule soupape d'admission et une seule soupape d'échappement.

11. - Procédé selon la revendication 9 ou 10, **caractérisé en ce qu'**on actionne une pluralité de soupapes d'admission par le même dispositif de distribution variable, et une pluralité de soupapes d'échappement par le même dispositif de distribution variable.

12. Procédé selon l'une des revendications 9 à 11 **caractérisé en ce que**, pour optimiser la respiration d'un moteur à 4 temps, on programme les moyens de déphasage pour augmenter l'avance d'ouverture d'admission, le retard de fermeture échappement, l'avance ouverture d'échappement et le retard de fermeture d'admission quand le régime augmente.

13. Procédé selon l'une des revendications 9 à 11 **caractérisé en ce que**, pour créer une rétention de gaz chauds dans un moteur à 4 temps, notamment diesel, on programme les moyens de déphasage pour avancer la fermeture d'échappement et, corrélativement, retarder l'ouverture d'admission sans modifier sensiblement l'ouverture échappement et la fermeture admission.

14. Procédé selon l'une des revendications 9 à 11, **caractérisé en ce que**, pour l'accélération d'un turbocompresseur d'un moteur, on programme les moyens de déphasage pour augmenter l'avance d'ouverture échappement sans modifier sensiblement la fermeture échappement, et les fermeture-ouverture admission.

15. Procédé selon l'une des revendications 9 à 11 **caractérisé en ce que**, pour augmenter l'efficacité du frein moteur d'un moteur à 4 temps, on programme les moyens de déphasage pour avancer l'ouverture d'échappement afin de diminuer le travail positif sur l'arbre moteur et accélérer le turbocompresseur et avancer la fermeture échappement pour augmenter le travail négatif pendant la course d'échappement et, afin d'éviter de récupérer cette énergie pendant la course d'aspiration, on avance simultanément l'ouverture admission pour laminer les gaz recomprimés vers le collecteur d'admission avec dégradation de la pression totale et conservation de la température totale, lesdits gaz étant ensuite réaspirés dans le cylindre pour participer au cycle suivant, l'échappement se fermant suffisamment tard pour que le volume de ces gaz reste inférieur à la cylindrée pour qu'un débit d'air traverse le cylindre dans le sens admission-échappement afin d'évacuer la chaleur produite par le freinage du véhicule.

16. Procédé selon l'une des revendications 9 à 11, **caractérisé en ce que**, pour faciliter le démarrage à froid d'un moteur diesel à 4 temps, on programme les moyens de déphasage à la façon de la revendication 15, mais en avançant encore plus la fermeture échappement pour inverser le débit d'air à travers le moteur de façon à accumuler, en amont du moteur, une charge d'air qui atteigne par paliers, en quelques cycles, la température d'autoallumage, la fermeture échappement étant retardée aussitôt après l'allumage pour amorcer un débit de gaz à travers le moteur.

17. Procédé selon l'une des revendications 9 à 11 **caractérisé en ce que** pour augmenter le mouvement de rotation de l'air admis dans le cylindre pas une pipe tangentielle ou hélicoïdale, on programme les moyens de déphasage pour retarder l'ouverture admission afin d'augmenter la chute de pression et donc la vitesse de l'écoulement au siège de la ou chaque soupape d'admission.

**Claims**

1.  Variable timing device for reciprocating engines having at least two camshafts (AC1, AC2), comprising, for one and the same cylinder, at least one admission valve (SA) and at least one exhaust valve (SE), which valves are actuated by said shafts, as well as angular phase shift means (D1, D2) for at least one of said camshafts, at least one and the same valve (A) being actuated by a hydraulic transmission means (4, 9, 10) which is capable of transmitting to said valve the movement of at least two cams (A1, A2) belonging to separate camshafts (AC1, AC2) which can be phase-shifted relative to one another, said transmission means comprising a cavity delimited by at least two deformable or movable surfaces (9,10) which are capable of being displaced by the cams (A1, A2), as well as at least one deformable or movable valve surface (4), said surfaces being returned by resilient return means, **characterized in that** said cavity is filled with a constant volume of hydraulic fluid equal to the volume of the cavity when the cams and the valve are at rest, so that, by virtue of the incompressibility of the hydraulic liquid, any displacement caused by a cam leads to displacement of the valve, and that any phase shift between the camshafts modifies the degree of displacement of the valve as a function of the angular position of the crankshaft.

2.  Device according to claim 1, **characterized in that** said movable or deformable surfaces are pistons sliding in cylinders (4, 9, 10).

3.  Device according to claim 1 or 2, **characterized in that** the hydraulic cavity is connected to an oil pressure source by means of a non-return valve (15) in order to compensate for leaks.

4.  Device according to one of claims 1 to 3, **characterized in that** it comprises a discharge orifice for hydraulic fluid which is open during the rest phases and closed during the active phases of the cams in order to evacuate any overflow.

5.  Device according to claim 4, **characterized in that** the small discharge orifice (6) is uncovered by one of the surfaces or pushers when it is at its dead centre and is covered again as soon as the piston or pusher moves, in order to drain off the overflow, providing automatic elimination of the operating play of the surfaces.

6.  Two stroke cycle or four stroke cycle engines in which at least one engine cylinder valve is actuated by a device according to one of claims 1 to 5.

7.  Engine according to claim 6, in which the engine cylinders have only one admission valve and/or one exhaust valve.

8.  Engine according to claim 6, in which the cylinders comprise a plurality of admission valves, which are preferably identical, the valves of a plurality being actuated by the same device.

9.  A method for operating a reciprocating engine, in which at least one engine cylinder valve (SA, SE) is actuated by a variable timing device according to anyone of claims 1 to 5, so that the movement of two cams (A1, A2) belonging to separate camshafts (AC1, AC2) which can be phase-shifted relative to one another by phase shift means, is transmitted by the hydraulic transmission means comprising a cavity filled with a constant volume of hydraulic fluid, so that any displacement caused by a cam (A1, A2) leads to displacement of the valve (SA, SE) and any phase shift between the camshafts (AC1, AC2) modifies the degree of displacement of the valve as a function of the angular position of the crankshaft,
    wherein, at least under some operating conditions, the camshafts (AC1, AC2) are phase-shifted in order to control, for one and the same cylinder, the start of the admission and/or exhaust phases by one of the cams (A1, A2), and the end of said phases by the other cam (A1, A2), by modifying during operation, by the phase shift means which are sensitive to one or more operating parameters of the engine, the phase-shift between the said camshafts (AC1, AC2), in order to vary the angular duration of the phase in question, the parameters acting on the phase shift means being namely the engine torque, the speed, the rate of recycling the burnt gases, the operating conditions of turbochargers, the characteristics of the engine brake and the cold start capacities.

10. Method according to claim 9, **characterized in that** each engine cylinder comprises only one admission valve and only one exhaust valve.

11. Method according to claim 9 or 10, **characterized in that** a plurality of admission valves are activated by the same variable timing device, and a plurality of exhaust valves are actuated by the some variable timing device.

12. Method according to one of claims 9 to 11, **characterized in that**, in order to optimize the respiration of a 4-stroke engine, the phase shift means are programmed to increase the admission opening advance, the exhaust cut-off retardation, the exhaust opening advance and the admission cut-off retardation when the speed increases.

13. Method according to one of claims 9 to 11, **characterized in that** in order to create a retention of hot gases in a 4-stroke engine, especially a diesel engine, the phase shift means are programmed to advance the exhaust cut-off and, correlatively, to retard the admission opening without substantially modifying the exhaust opening and the admission cut-off.

14. Method according to one of claims 9 to 11, **characterized in that**, in order to accelerate a turbocharger of an engine, the phase shift means are programmed to increase the exhaust opening advance without substantially modifying the exhaust cut-off, and the admission cut-off/opening.

15. Method according to claims 9 to 11, **characterized in that**, in order to increase the efficiency of the engine brake of a 4-stroke engine, the phase shift means are programmed to advance the exhaust opening in order to reduce the positive work on the engine shaft and accelerate the turbocharger, and to advance the exhaust cut-off in order to increase the negative work during the exhaust stroke and, in order to avoid recovering that energy during the intake stroke, the admission opening is simultaneously advanced in order to draw the recompressed gases towards the intake manifold with degradation of the total pressure and conservation of the total temperature, said gases then being drawn into the cylinder again in order to participate in the following cycle, the exhaust being cut off sufficiently late that the volume of those gases remains lower than the cubic capacity of the engine, so that a flow of air passes through the cylinder in the admission-exhaust direction in order to evacuate the heat produced by braking of the vehicle.

16. Method according to one of claims 9 to 11, **characterized in that**, in order to facilitate cold starting of a 4-stroke diesel engine, the phase shift means are programmed to retard the admission opening in order to increase the drop in pressure and accordingly the speed of flow at the seat of the valve, but the exhaust cut-off is advanced even further in order to reverse the flow of air through the engine so as to accumulate, upstream of the engine, an air load which reaches auto-ignition temperature stepwise, over several cycles, the exhaust cut-off being retarded immediately after ignition in order to start a flow of gas through the engine.

17. Method according to one of claims 9 to 11, **characterized in that**, in order to increase the rotary movement of the air admitted into the cylinder through a tangential or helicoidal pipe, the phase shift means are programmed to retard the admission opening in order to increase the drop in pressure and accordingly the speed of flow at the seat of the or of each admission valve.

**Patentansprüche**

1. Variable Ventilsteuerungseinrichtung für Brennkraftmaschinen mit mindestens zwei Nockenwellen (AC1, AC2), für denselben Zylinder mindestens ein Einlassventil (SA) und mindestens ein Auslassventil (SE) umfassend, die von den genannten Wellen betätigt werden, sowie Mitteln zur Phasenwinkelverschiebung (D1, D2) für mindestens eine der Nockenwellen, wobei mindestens ein Ventil (A) durch ein hydraulisches Übertragungsmittel (4, 9, 10) betätigt wird, das in der Lage ist, zu diesem Ventil die Bewegung von mindestens zwei Nocken (A1, A2) zu übertragen, die zu unterschiedlichen Nockenwellen (AC1, AC2) gehören, die im Verhältnis zueinander phasenverschiebbar sind, wobei dieses Übertragungsmittel einen Hohlraum umfasst, der von mindestens zwei verformbaren oder beweglichen Flächen (9, 10) begrenzt wird, die jeweils durch die Nocken (A1, A2) verschiebbar sind, sowie von mindestens einer verformbaren oder beweglichen Ventilfläche (4), wobei diese Flächen von elastisches Rückholmitteln zurückgeholt werden, **dadurch gekennzeichnet, dass** der Hohlraum mit einem konstanten Volumen Hydraulikflüssigkeit gefüllt ist, das dem Volumen des Hohlraums entspricht, wenn die Nocken und das Ventil in Ruhestellung sind, so dass aufgrund der Nichtkomprimierbarkeit der Hydraulikflüssigkeit jede Verschiebung, die von einer Nocke hervorgerufen wird, eine Verschiebung des Ventils hervorruft, und dass jede Phasenverschiebung zwischen den Nockenwellen das Verschiebungsgesetz des Ventils in Abhängigkeit von der Winkelposition der Kurbelwelle verändert.

**2.** Einrichtung nach Anspruch 1, **dadurch gekennzeichnet, dass** die beweglichen oder verformbaren Flächen in Zylindern gleitende Kolben (4, 9, 10) sind.

**3.** Einrichtung nach einem der Ansprüche 1 und 2, **dadurch gekennzeichnet, dass** der hydraulische Hohlraum mittels eines Rückschlagventils (15) mit einer Öldruckquelle verbunden ist, um Leckagen zu kompensieren.

**4.** Einrichtung nach einem der Ansprüche 1 bis 3, **dadurch gekennzeichnet, dass** sie eine Öffnung zum Ablassen der Hydraulikflüssigkeit umfasst, die während der Ruhephasen geöffnet und während der aktiven Phasen der Nocken geschlossen ist, um den eventuellen Überlauf abzulassen.

**5.** Einrichtung nach Anspruch 4, **dadurch gekennzeichnet, dass** die kleine Ablassöffnung (16) von einer der Flächen oder Stößel freigelegt wird, wenn sich diese/r an ihrem/seinen Totpunkt befindet, und abgedeckt wird, sobald sich der Kolben oder der Stößel verschiebt, um den Überlauf abzulassen, wodurch eine automatische Annullierung des Betriebsspiels der Flächen gewährleistet wird.

**6.** Zweitakt- oder Viertaktmotoren, bei denen mindestens ein Motorzylinderventil von einer Einrichtung nach einem der Ansprüche 1 bis 5 betätigt wird.

**7.** Motor nach Anspruch 6, dessen Motorzylinder nur ein Einlassventil und/oder ein Auslassventil besitzen.

**8.** Motor nach Anspruch 6, dessen Zylinder eine Mehrzahl, vorzugsweise identischer, Einlassventile, oder eine Mehrzahl, vorzugsweise identischer, Auslassventil umfassen, wobei die Ventile einer Mehrzahl von derselben Einrichtung betätigt werden.

**9.** Verfahren zur Umsetzung einer Brennkraftmaschine, bei dem mindestens ein Motoren-Zylinderventil (SA, SE) von einer variablen Ventilsteuereinrichtung nach einem der Ansprüche 1 bis 5 betätigt wird, so dass die Bewegung von zwei Nocken (A1, A2) übertragen wird, die zu zwei unterschiedlichen Nockenwellen (AC1, AC2) gehören, die im Verhältnis zueinander durch Phasenverschiebungsmittel phasenverschiebbar sind, durch das hydraulische Übertragungsmittel der besagten variablen Ventilsteuerungseinrichtung, die einen Hohlraum besitzt, der mit einem konstanten Volumen Hydraulikflüssigkeit gefüllt ist, so dass jede von einer Nocke (A1, A2) hervorgerufene Verschiebung eine Verschiebung des Ventils (SA, SE) nach sich zieht, und dass jede Phasenverschiebung zwischen den Nockenwellen (AC1, AC2) das Verschiebungsgesetz des Ventils (SA, SE) in Abhängigkeit von der Winkelposition der Kurbelwelle verändert,
wobei mindestens unter bestimmten Betriebsbedingungen die Nockenwellen (AC1, AC2) phasenverschoben werden, um für denselben Zylinder den Beginn der Einlassphasen und/oder Auslassphasen durch einen der Nocken (A1, A2) zu steuern und das Ende dieser Phasen durch den anderen Nocken (A1, A2), wobei während des Betriebs die Phasenverschiebung zwischen den Nockenwellen (AC1, AC2) mit den Phasenverschiebungsmitteln, die auf einen oder mehrere Betriebsparameter des Motors reagieren, verändert wird, um die Winkeldauer der betreffenden Phase zu variieren, wobei die Parameter auf die Phasenverschiebungsmittel wirken, um eine Phasenwinkelverschiebung zu erzeugen, was insbesondere das Motordrehmoment, die Geschwindigkeit, der Recyclinggrad der verbrannten Gase, die Funktionsbedingungen der Turbokompressoren, die Eigenschaften der Motorbremse und die Kaltstartleistung sein kann.

**10.** Verfahren nach Anspruch 9, **dadurch gekennzeichnet, dass** in jedem Motorzylinder ein einziges Einlassventil und ein einziges Auslassventil angeordnet ist.

**11.** Verfahren nach Anspruch 9 oder 10, **dadurch gekennzeichnet, dass** eine Mehrzahl von Einlassventilen von derselben variablen Ventilsteuereinrichtung und eine Mehrzahl von Auslassventilen von derselben variablen Ventilsteuereinrichtung betätigt werden.

**12.** Verfahren nach einem der Ansprüche 9 bis 11, **dadurch gekennzeichnet, dass** zur Optimierung der Atmung eines Viertaktmotors die Phasenschiebungsmittel derart programmiert werden, um den Vorlauf der Öffnung des Einlasses, die Verzögerung des Schließen des Auslasses; den Vorlauf des Öffnens des Auslasses und die Verzögerung des Schließens des Einlasses zu erhöhen, wenn sich die Drehzahl erhöht.

**13.** Verfahren nach einem der Ansprüche 9 bis 11, **dadurch gekennzeichnet, dass** zur Rückhaltung der heißen Gase in einem Viertaktmotor, vor allem in einem Dieselmotor, die Phasenschiebungsmittel derart programmiert werden, um das Schließen des Auslasses vorzuziehen und in Korrelation dazu das Öffnen des Einlasses zu verzögern, ohne das Öffnen des Auslassöffnung und das Schließen des Einlasses erheblich zu verändern.

**14.** Verfahren nach einem der Ansprüche 9 bis 11, **dadurch gekennzeichnet, dass** zur Beschleunigung eines Turbokompressors eines Motors die Phasenschiebungsmittel derart programmiert werden, um den Vorlauf der Öffnung des Auslasses zu erhöhen, ohne das Schließen des Auslasses erheblich zu verändern, und das Schließen-Öffnen des Einlasses.

**15.** Verfahren nach einem der Ansprüche 9 bis 11, **dadurch gekennzeichnet, dass** zur Erhöhung der Leistung der Motorbremse eines Viertaktmotors die Phasenschiebungsmittel derart programmiert werden, um das Öffnen des Auslasses vorzuziehen, um die positive Arbeit auf der Motorwelle zu verringern und den Turbokompressor zu beschleunigen, und um das Schließen des Auslasses vorzuziehen, um die negative Arbeit während des Auslasshubs zu erhöhen, und, um zu vermeiden, dass diese Energie während des Ansaughubs zurückgewonnen wird, wird gleichzeitig das Öffnen des Einlasses vorgezogen, um die rekomprimierten Gase in Richtung Aufnahmekollektor zu drosseln bei Verminderung des Gesamtdrucks und Beibehaltung der Gesamttemperatur, wobei diese Gase dann erneut in den Zylinder angesaugt werden, um am folgenden Zyklus teilzunehmen, wobei sich der Auslass ausreichend spät schließt, damit das Gasvolumen kleiner als der Hubraum bleibt, damit ein Luftstrom den Zylinder in Richtung Einlass-Auslass durchströmt, um die durch das Bremsen des Fahrzeugs erzeugte Hitze abzulassen.

**16.** Verfahren nach einem der Ansprüche 9 bis 11, **dadurch gekennzeichnet, dass** zur Erleichterung des Kaltstarts eines Viertakt-Dieselmotors die Phasenschiebungsmittel in der Art von Anspruch 15 programmiert werden, wobei jedoch das Schließen des Auslasses noch weiter vorgezogen wird, um den Luftstrom durch den Motor umzukehren, um stromaufwärts zum Motors eine Luftlast zu akkumulieren, die schrittweise in einigen Zyklen die Selbstzündungstemperatur erreicht, wobei das Schließen des Auslasses sofort nach dem Zünden verzögert wird, um einen Gasstrom durch den Motor anzuregen.

**17.** Verfahren nach einem der Ansprüche 9 bis 11, **dadurch gekennzeichnet, dass** zur Erhöhung des Rotationsbewegung der Luft, die im Zylinder über ein Tangentialrohr oder spiralförmiges Rohr aufgenommen wird, die Phasenschiebungsmittel programmiert werden, um die Öffnung des Einlasses zu verzögern, um den Druckabfall und damit die Ablassgeschwindigkeit am Sitz des oder an jedem Einlassventil zu erhöhen.

FIG.1

FIG.2

**FIG.3**

PMB(explosion)   PMH(èchappement)   PMA(admission)

E2   E1         A2   A1
OE              OA   FE
  x       HAUT REGIME   x/2 x/2           FA

E2              A1
E1              FE OA   A2
OE   BAS REGIME                    FA

0°        180°        360°        540°        720°

FIG.4

FIG.5

## FIG.6

TURBO COMPRESSION MONOÉTAGE AVEC
TURBINE A GÉOMÉTRIE VARIABLE

FIG.7A

TURBO COMPRESSION A DEUX ÉTAGES A GÉOMÉTRIE
FIXE

FIG.7B

FIG.8

Démarrage à froid

Marche normale

$\mu$

$\lambda$

OE (70)   OE (140)   FE (230)   FE (300)   OA (360)   OA (420)   FA (540)   FA (580)

180                    360                    540

E₂ 40°                A₁ 70°

E₁ 70°                A₂ 40°

FIG.9

—— Calage en marche normale avec recyclage de gaz brulés

----- Calage pour le démarrage à froid

Le calage frein moteur est intermédiaire

EP 1 341 993 B1

FIG.10

24